(19) Europäisches Patentamt
European Patent Office
Office européen des brevets

(11) **EP 4 343 603 A1**

(12) **EUROPEAN PATENT APPLICATION**

(43) Date of publication:
**27.03.2024 Bulletin 2024/13**

(21) Application number: **22196991.8**

(22) Date of filing: **21.09.2022**

(51) International Patent Classification (IPC):
**G06F 30/12** (2020.01)          **G06F 30/15** (2020.01)
**G06F 119/20** (2020.01)

(52) Cooperative Patent Classification (CPC):
**G06F 30/12; G06F 30/15;** G06F 2119/20

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **KULKARNI, Srinidhi
560092 Bangalore, Karnataka (IN)**

• **PRAHARAJ, Amlan
560100 Bangalore, Karnataka (IN)**
• **SHUKLA, Shyam Sundar
560100 Bangalore, Karnataka (IN)**
• **SAVARIA, Aman
496001 Raigarh, Chattisgarh (IN)**

(74) Representative: **Horn Kleimann Waitzhofer
Schmid-Dreyer
Patent- und Rechtsanwälte PartG mbB
Theresienhöhe 12
80339 München (DE)**

(54) **SYSTEM AND METHOD FOR MANAGING GEOMETRIC DESIGNS**

(57)     A method for managing a geometric design created using a CAD tool, comprising the steps of receiving, by a processor, a request for generating a machine-comprehensible graph data model corresponding to a geometric design created using a CAD tool, from a requesting entity. Further, a plurality of features associated with the geometric design are parsed to identify a set of first attributes indicative of a design intent. One or more of the features are associated with at least one sketch used for creation of the geometric design and at least one operation performed on the sketch. Further, the at least one sketch is analyzed to compute a set of second attributes indicative of a vector representation of the sketch. The machine-comprehensible graph data model generated based on the set of first attributes and the set of second attributes is provided to the requesting entity.

Processed by Luminess, 75001 PARIS (FR)

**Description**

TECHNICAL FIELD

The present invention relates to data management, and in particular relates to a computer system and method for managing geometric designs created using a Computer-Aided Design tool.

BACKGROUND

At present, reuse of product designs generated through Computer-Aided Design (CAD) tools is enabled solely by human knowledge. For example, a designer may remember various product designs created by him/her in the past for various applications and may therefore know how to reuse/adapt existing designs for subsequent applications. However, another designer with no knowledge of designs created in the past may create the design for the new application from scratch, thereby leading to inefficiency.

It may be therefore useful to create a recommender system that can intelligently identify a design intent of a user and recommend similar designs created in the past for consideration by the designer. However, the challenge in building such a recommender system is that computer programs are unable to comprehend geometric designs created via CAD tools.

In addition to the above, iterative tasks such as defeaturing or tweaking a geometric design for performing simulations is not based on rules, but on complex understanding of the geometric design by the designer. Machine-comprehension of the geometric design may enable automation of such pre-processing tasks.

In light of the above, there exists a need for an improved system and method for managing geometric designs created using CAD tools, for enabling machine-comprehension of the geometric designs.

SUMMARY

Variously disclosed embodiments comprise methods and computer systems that may be used to manage geometric designs generated by Computer-Aided Design tools.

According to a first aspect of the invention, a computer-implemented method of managing geometric designs created using a Computer-Aided Design tool. The method comprises receiving, by a processor, a request for generating a machine-comprehensible graph data model corresponding to the geometric design created using the Computer-Aided Design tool, from a requesting entity. In an embodiment, the geometric design is at least one of a two-dimensional design and a three-dimensional design.

The method further comprises parsing, by a processor, a plurality of features associated with the geometric design to identify a set of first attributes indicative of a design intent, wherein one or more of the features are associated with at least one sketch used for creation of the geometric design and at least one operation performed on the sketch. In an embodiment, the set of first attributes comprises one or more of a label, an expression, a setting, a parent feature and a child feature associated with each of the features. In an embodiment, parsing the plurality of feature associated with the geometric design to identify the first set of attributes comprises, parsing a model tree comprising the plurality of features associated with the geometric design in the Computer-Aided Design tool, using an application programming interface, to extract one or more first attributes corresponding to each of the features. The model tree is a hierarchical data structure of the features arranged in an order of creation of the features.

The method further comprises analyzing, by the processor, the at least one sketch to compute a set of second attributes indicative of a vector representation of the sketch. In an embodiment, the set of second attributes comprises one or more of a shape embedding indicative of a shape associated with the sketch, a dimension embedding indicative of a scale of the sketch, and a normal vector to the sketch. In an embodiment, analyzing the at least one sketch to compute the second set of attributes indicative of the vector representation of the sketch comprises, applying a first computer vision model to an image of the sketch to generate the shape embedding of the sketch. In another embodiment, analyzing the at least one sketch to compute the second set of attributes indicative of the vector representation of the sketch comprises generating at least one bounding box around the sketch in the image, using a second computer vision model. Further, the dimension embedding corresponding to the sketch is computed based on spatial coordinates of the bounding box. In an embodiment, the normal vector to the sketch is computed using a predefined function.

The method further comprises providing, by the processor, the machine-comprehensible graph data model generated based on the set of first attributes and the set of second attributes, to the requesting entity. In an embodiment, wherein providing the machine-comprehensible graph data model generated based on the set of first at-tributes and the set of second attributes, to the re-questing entity, comprises mapping the set of first attributes and the set of second attributes to a predefined ontology. Further, triples are generated based on the mapping of the set of first attributes and the set of second attributes to the predefined ontology. The triples form the machine-comprehensible graph data model of the geometric design. Further, storing the triples to a graph database, wherein the graph database is accessible by the requesting entity. In an embodiment, the graph data model is a property graph.

In an embodiment, the method may further comprise a step of providing a graphical representation of the graph data model on a user-interface.

In an embodiment, the method may further comprise a step of using the graph data model to identify similarity of the geometric design to a subsequent geometric design.

According to a second aspect of the invention, a computer system may be arranged and configured to execute the steps of the computer-implemented method according to the first aspect of the invention.

According to a third aspect of the invention, a computer program product may comprise computer program code which, when executed by the computer system according to the second aspect of the invention, causes the computer system to carry out the method according to the first aspect of the invention.

According to a fourth aspect of the invention, a computer-readable medium may comprise the computer program product according to the third aspect of the invention. By way of example, the described computer-readable medium may be non-transitory and may further be a software component on a storage device.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure.

Also, before undertaking the detailed description below, various definitions for certain words and phrases are provided throughout this patent document and those of ordinary skill in the art will understand that such definitions apply in many, if not most, instances to prior as well as future uses of such defined words and phrases. While some terms may comprise a wide variety of embodiments, the appended claims may expressly limit these terms to specific embodiments.

BRIEF DESCRIPTION OF FIGURES

FIG 1 illustrates a functional block diagram of an example computer system or data processing system that facilitates management of geometric designs, in accordance with an embodiment of the present invention;

FIGS 2A-C illustrate an example of a geometric design created using a Computer-Aided Design tool;

FIG 3 shows a graphical user interface displaying a graphic representation of a property graph, in accordance with an embodiment of the present invention;

FIG 4 shows a convolutional neural network, in accordance with an embodiment of the present invention;

FIG 5 shows a flowchart of a method for managing a geometric design, in accordance with an embodiment of the present invention; and

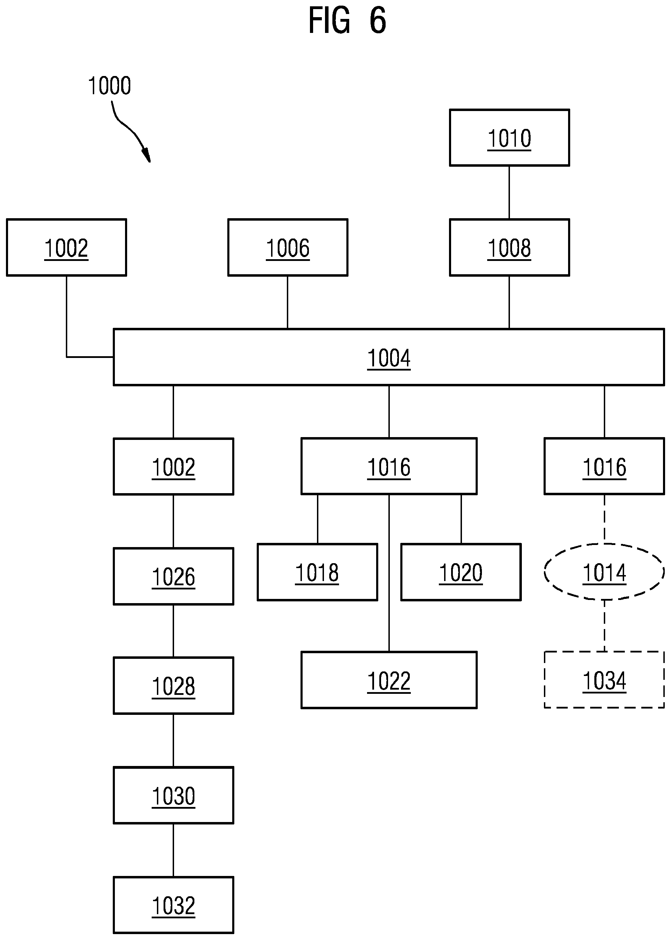

FIG 6 illustrates a block diagram of a data processing system, in accordance with an embodiment of the present invention.

DETAILED DESCRIPTION

Various technologies that pertain to systems and methods for managing geometric designs will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

In the present document, an approach is suggested to manage geometric designs generated by a Computer-Aided Design tool.

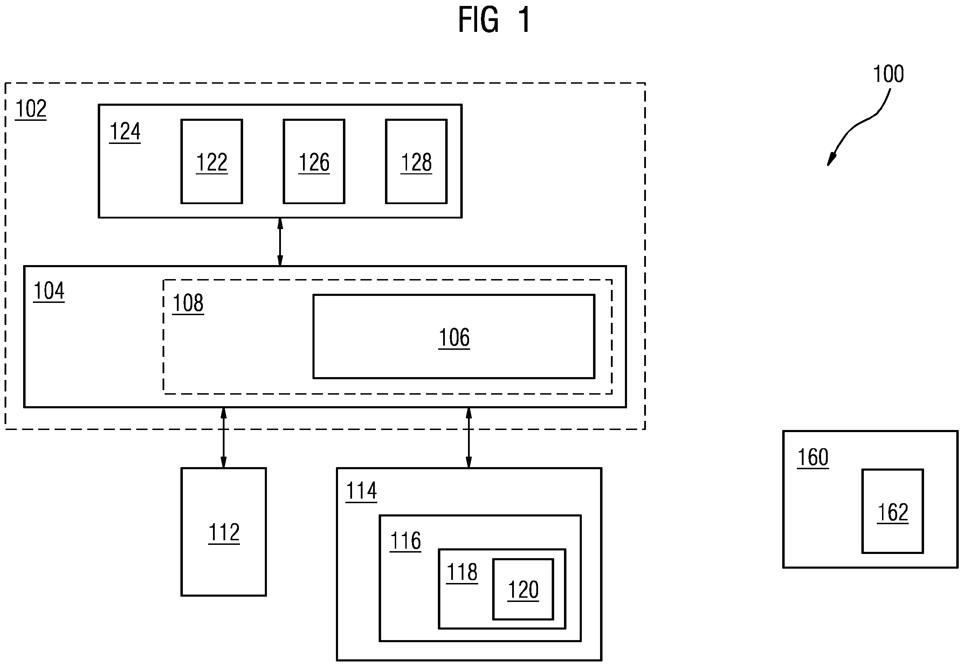

FIG 1 illustrates a functional block diagram of an example computer system or data processing system 100 that facilitates management of geometric designs generated by a Computer-Aided Design (CAD) tool, in accordance with an embodiment of the present invention.

The computer system 100 may include a design management platform 102 including at least one processor 104 that is configured to execute at least one design management module 106 from a memory 108 accessed by the processor 104. Herein, the design management platform 102 may include functionalities of receiving requests for generating machine-comprehensible graph data model of a geometric design, determining attributes associated with the geometric design, and generating a graph data model based on determined attributes. The design management module 106 may be configured (i.e., programmed) to cause the processor 104 to carry out various acts and functions described herein. For example, the described design management module 106 may include and/or correspond to one or more components of the design management platform 102 that is configured to generate and store graph data models corresponding to geometric designs generated by a CAD tool.

By way of example, the design management platform 102 may be cloud-based, internet-based and/or be operated by a provider providing CAD tools. The user may be located close to the design management platform 102 or remote to the design management platform 102, e.g., using a workstation for connecting to the design management platform 102, e.g., via the internet, wherein the workstation may include an input device 112 and a display device 114. In some examples, the design management platform 102 may be installed and run on a user's device, such as a computer, laptop, pad, on-premise computing facility, or the like.

Examples of product systems that may be adapted to include the geometric design management features described herein may include CAD tools such as NX CAD of Siemens AG, Germany. However, it should be appreciated that the systems and methods described herein may be used in other product systems (e.g., product lifecycle management (PLM), product data management (PDM)) and/or any other type of system that uses CAD files comprising geometric designs.

It should be appreciated that CAD files generated by CAD tools are not machine-comprehensible and are therefore not reusable in applications that require geometric comprehension. Similarly, it may be required to identify differences and/or similarities between two geometric designs in certain applications.

To enable the enhanced management of geometric designs, the described product system or computer system 100 may include the at least one input device 112 and the at least one display device 114 (such as a display screen).

The described processor 104 may be configured to generate a graphical user interface (GUI) 116 through the display device 114. Such a GUI 116 may include GUI elements such as buttons, links, search boxes, lists, text boxes, images, scroll bars usable by a user to provide inputs through the input device 112 required to access geometric designs or graph data models corresponding to the geometric designs. By way of example, the GUI 116 may include a design UI 118 provided to a user for providing inputs for creating geometric designs, and for initiating generation of graph data models corresponding to the geometric design. Further, a graph UI 120 is provided within the design UI 118 for enabling the user to view the graph data model corresponding to a given geometric design. The graph data model shows relationships between elements in the geometric design.

In an embodiment, the design management module 106 and/or the processor 104 may be configured to receive a request for generating a machine-comprehensible graph data model corresponding to a geometric design created using a CAD tool, from a requesting entity (not shown). The requesting entity may include, but not limited to, a user device, a service or an application. The requesting entity may be communicatively coupled to the computer system 100 over a network (not shown). The geometric design may be one of a two-dimensional design and a three-dimensional design. In an implementation, the design UI 118 may enable the user to request the computer system 100 to generate a graph data model for a given geometric design created in a CAD tool, by selecting a 'Convert' option provided on the design UI 118. In an example, the graph data model may be generated, upon being requested by the user, during creating of the geometric design in the CAD tool. In another example, the graph data model may be generated at a later point of time based on a CAD file corresponding to the geometric design. Non-limiting examples of CAD file formats include .DWG, .DXF, .DGN, and .STL. In an example, the user may upload the CAD file to the design UI 118 or provide a uniform resource locator or a file path corresponding to the CAD file. Similarly, services or applications may request the computer system 100 for the machine-comprehensible graph data model via an Application Programming Interface (API).

The design management module 106 and/or the processor 104 may be further configured to parse a plurality of features associated with the geometric design to identify a set of first attributes indicative of a design intent. The feature is a data object comprising attributes associated with the respective sketch or operation in a predefined format. Further, one or more of the features are associated with at least one sketch used for creation of the geometric design and at least one operation performed on the sketch. The term 'sketch' as used herein refers to basic shapes or compound shapes in two-dimension or three-dimension that is used to create the geometric design. The term 'operation' as used herein refers to one or more actions such as extrude, extrude cut, revolve, union etc., that are used to modify a sketch in order to generate the final geometric design.

In an embodiment, the set of first attributes comprises one or more of a label, an expression, a setting, a parent feature and a child feature associated with each of the features. The term 'expression' as used herein refers to parameters including, but not limited to, length, angle etc., associated with a feature. For example, if the feature is a sketch of a circle, the expression may include, but is not limited to, center and radius of the circle. In another example, if the feature is a sketch of an arc, the expression may include, but not limited to, center, radius, start angle, end angle and length of the arc. Similarly, if the feature is an extrude operation, the expression may include start point and end point of extrusion, angle of extrusion etc. The term 'settings' as used herein refers to, for example, a type of extrude (e.g., solid or shell), body addition or removal etc. It must be understood that first attributes such as settings may be defined explicitly, by the user during design of the geometric design, or implicitly captured by the CAD tool based on interaction of the user with the CAD tool.

In an embodiment, parsing the plurality of features associated with the geometric design includes parsing a model tree 122 comprising the plurality of features associated with the geometric design in the CAD tool using an application programming interface, to extract one or more first attributes corresponding to each of the feature objects. The model tree 122 is a hierarchical data structure of the features arranged in an order of creation of the features. In other words, the model tree 122 is a directory comprising a hierarchical list of features created for the geometric design. In the present embodiment, the model tree 122 is stored in the data store 124.

In particular, the CAD tool generates model trees for each design project within the CAD tool. Consequently, features corresponding to each of the sketches and the corresponding operations are stored in the model tree 122 associated with the project corresponding to the geometric design in the CAD tool. In addition, the model tree 122 may also include other information, such as for example, the display status (hidden/unhidden or suppressed) of the respective features. The model tree 122 may be stored in a data store 124 associated with the computer system 100.

In an implementation, the application programming interface may call a predefined extraction function available in the CAD tool to loop through each of the features in the model tree 122 for extracting the first attributes. For example, in NXCAD tool, the GetFeatures() function may be used to identify the list of features in the model tree 122. Further, each of the features is processed by the extraction function to identify respective label, expressions, settings etc. The extraction function may further identify dependency between the features in the form of parent-child relationships. More specifically, the parent-child relationship is determined by identifying 'parent' features and 'child' features corresponding to each of the features. Herein, parent features are features on which a given feature is based, while child features are features that may make use of the given feature. For example, if sketch of a D-section is subjected to an extrude operation to generate a D-shaft, the sketch feature 'D-section' is a parent feature to 'Extrude' operation feature, whereas, the 'Extrude' operation feature is a child feature to the sketch feature 'D-section'. The predefined extraction function further provides an attribute-value pair for each first attribute corresponding to a feature in the model tree 122. The API further generates an output file comprising attribute-value pairs corresponding to the first attributes associated with each of the features in the model tree 122. In an example, the output file is in dictionary format. In another example, the output file is in JSON format.

Advantageously, parsing of the model tree 122 aids in capturing effect of a sequence of steps/operations performed by the user, on the final geometric design. For example, the order in which operations such as extrude, extrude cut and union are performed determine the final form of the geometric design. Further, the order of operations also helps in capturing design intent of the user. In addition, the extraction of parent and child features helps in capturing relationship among the features in the model tree 122, in the form of attribute-value pairs.

The design management module 106 and/or the processor 104 may be further configured to analyze the at least one sketch to compute a set of second attributes indicative of a vector representation of the sketch. In an embodiment, the set of second attributes comprises one or more of a shape embedding indicative of a shape associated with the sketch, a dimension embedding indicative of a scale of the sketch, and a normal vector to the sketch. In a preferred embodiment, the set of second attributes comprises the normal vector, the shape embedding, and the dimension embedding.

The shape embedding is an embedding that represents shape of the sketch in the predetermined orientation. The shape embedding of the sketch is generated by, firstly, exporting an image of the sketch corresponding to the predetermined orientation or view from the CAD file. In an embodiment, another API that interfaces with the CAD tool is used to export the image of the sketch from the CAD tool. Further, the design management module 106 and/or the processor 104 applies a first computer vision model to the image of the sketch to generate the shape embedding corresponding to the sketch.

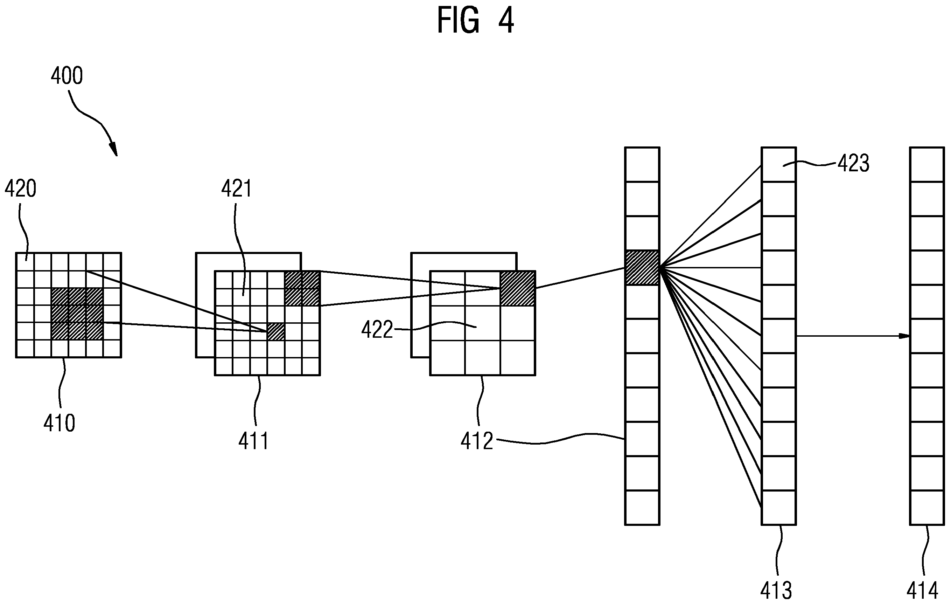

In a preferred embodiment, the first computer vision model is a Convolutional Neural Network (CNN) model. The CNN model may be based on any architecture such as LeNet, AlexNet, ZFNet, Inception, VGGNet, ResNet, attention-based CNN, feature map-based CNN etc. The structure of a CNN model is explained later with reference to FIG 4. In an embodiment, kernels associated with the CNN model may identify constituent shapes or elements of the sketch from the image to generate shape embeddings for each of the constituent shapes. It must be understood that the output of the CNN model may vary for the same geometric design when the orientation of the design changes.

The dimension embedding is an embedding that represents a scale or size of the sketch. In an embodiment, the dimension embeddings are computed by generating at least one bounding box around the sketch in the image, using a second computer vision model. The bounding box defines spatial location of the sketch in a plane. The second computer vision model may also be a CNN model as shown in FIG 4, trained to recognize 'objects' within an image. Further, the dimension embedding corresponding to the sketch is computed based on spatial coordinates of the bounding box. For example, the spatial coordinates may be used to compute an area or scale of the bounding box. In another embodiment, the dimension embeddings are generated based on fitting of a predefined shape, e.g., an ellipse, into the sketch. Further, the area or dimensions occupied by the predefined shape may be used to compute the dimension embedding.

The normal vector is a mathematical representation of the orientation of the sketch. Herein, the orientation of the sketch indicates a plane in which the sketch exists, and wherein boundaries of the sketch may be defined by coordinates in the plane. For example, the sketch may be a circle in XY-plane. The normal vector [0, 0, 1] indicates that the sketch exists in the XY-plane.

Advantageously, using vector representations of shape (shape embedding), orientation (normal vector) and scale (dimension embedding) enables mathematical representation of sketches used for building the geometric design. Such mathematical representation aids generation of the graph data model of the geometric design.

The design management module 106 and/or the processor 104 may be further configured to provide to the requesting entity, a machine-comprehensible graph data model for the geometric design, generated based on the set of first attributes and the set of second attributes. The graph data model is a graph data structure that enables performing of analytical operations based on relationships across a set of data. In a preferred embodiment, the graph data model is a property graph. The property graph represents data in the form of nodes and edges, and properties/attributes corresponding to each of the nodes and edges. In a graph data model, two nodes linked by an edge represent the subject and the predicate that are related by a certain relationship.

In the present embodiment, the nodes of the property graph represent features associated with the geometric design, and the edges represent relationships between the features. Each of the nodes and the edges are associated with a label and may store properties in the form of key-value pairs. For example, nodes may be labelled for the purpose of grouping. Further, each of the edges are directed, and have a start node and an end node, thereby making the property graph a directed graph. The properties associated with an edge may include additional metadata and semantics corresponding to the relationship between the start node and the end node of the edge.

In an embodiment, the graph data model is generated by firstly, mapping the set of first attributes and the set of second attributes to a predefined ontology. The predefined ontology may define different classes of entities in a geometric design as for example, solid object, subtractive solid object, operation and sketch. Further, each of the features identified during parsing of the model tree 122 are mapped to the respective entities based on the respective class of entity. More specifically, attributes (first attribute or second attribute) of each of the features is mapped to entities in the ontology based on the class of entity associated with the respective feature. In an embodiment, the predefined ontology is based on a Resource Description Framework (RDF) schema.

Further, triples are generated based on the mapping of the set of first attributes and the set of second attributes. The triples form the machine-comprehensible graph data model of the geometric design. The term 'triple' as used herein refers to a set of three entities that codifies a statement about the mapped first geometric designs in the form of subject-predicate-object expressions. An example of a triple is (DShaft, '-', Union) which links a feature 'D_Shaft' to another feature 'Union' associated with the geometric design. In an implementation, the triples are generated based on parent features and child features. Further, relationship between the parent feature and the child feature may be defined based on class of entity associated with the parent feature and/or the child feature. For example, if the parent feature is a subtractive solid object, the relationship may be defined as 'negative' or '-'. In another example, if the parent feature is a solid object, the relationship may be defined as 'positive' or '+'. The triples are generated using a predefined library, for example, a Web Ontology Language (OWL) library. The triples are further stored to a graph database 126. The graph database 126 is accessible by the requesting entity. For example, the requesting entity may query the graph database 126 to access the graph data model. Non-limiting examples of graph databases include GraphDB, MongoDB and DataStax. In an embodiment, the graph database 126 may be part of the data store 124 associated with the computer system 100.

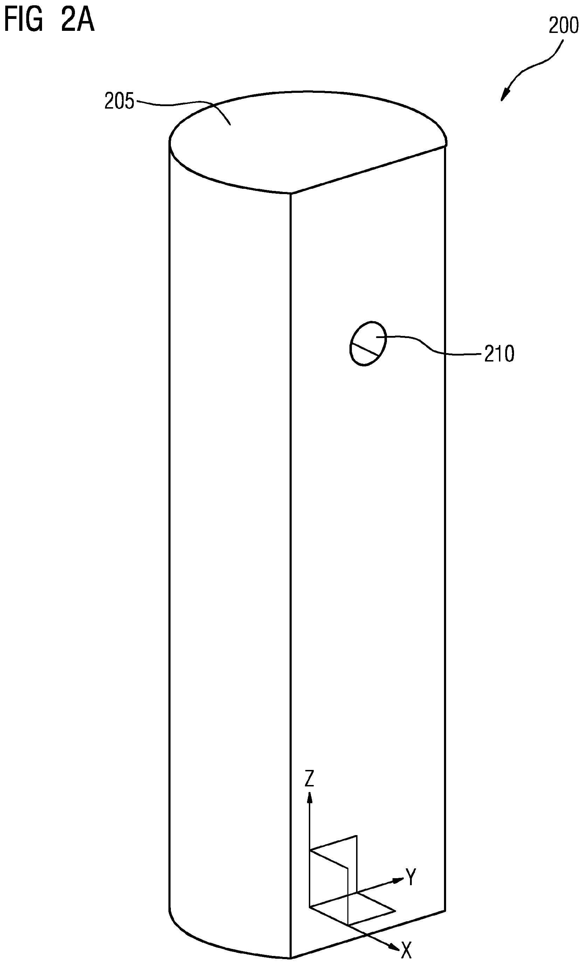

In the property graph, each of the entities store first attributes and/or second attributes associated with the respective features. An example of a property graph is explained in detail later with reference to FIGS 2A-3.

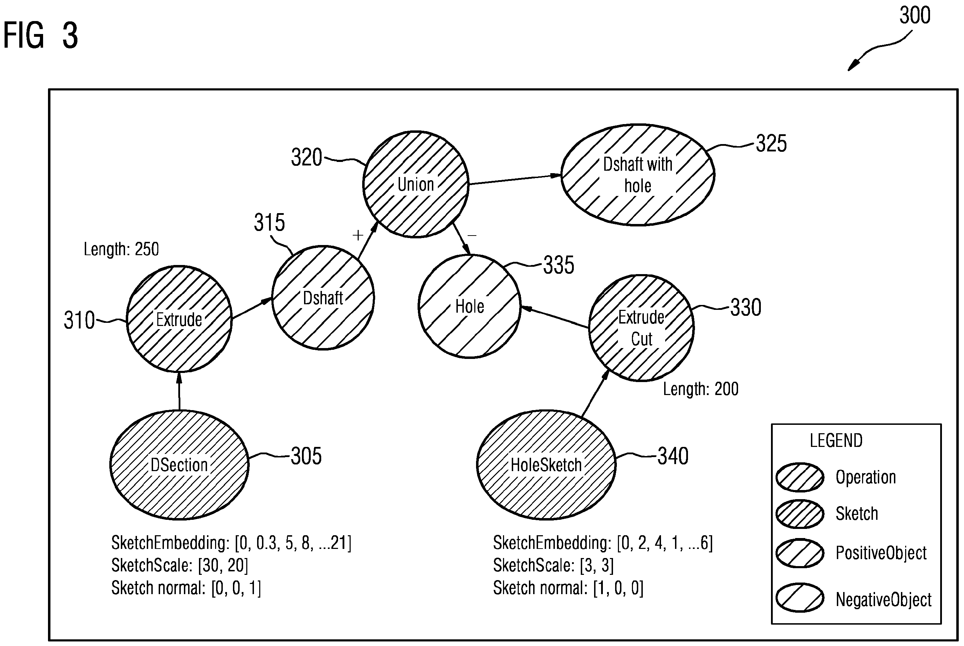

In an embodiment, the design management module 106 and/or the processor 104 may be further configured to providing a graphic representation of the graph data model on a user interface, for example, the graph UI 120. The graphic representation of a property graph is shown in FIG 3. The nodes of the graph data model may be identified by labels of the corresponding features. Further, respective first attributes and/or second attributes corresponding to each of the nodes are also denoted in the graphic representation of the graph data model. In an exemplary embodiment, the user may interact with the design UI 118 to view the first attributes and/or the second attributes associated with each of the features. For example, the user may select, for example, by double-click on dynamic representation of a specific node in the graph data model to view first attributes and/or second attributes associated with the respective feature.

In an embodiment, the design management module 106 and/or the processor 104 is configured to using the graph data model to identify similarity of the geometric design to a subsequent geometric design. In an embodiment, using the graph data model to identify similarity of the geometric design to the subsequent geometric design comprises generating a subsequent graph data model corresponding to the subsequent geometric design using a similar method as explained above. Further, both the graph data models may be vectorized using a vectorization function. For example, the Graph2Vec function in Python may be used to vectorize the graph data models, i.e., to generate graph embeddings. Further, the graph embeddings of the graph data models may be compared, using a similarity checking algorithm, to determine the similarity between the geometric designs.

The similarity checking algorithm may compute a similarity value for any given pair of graph embeddings. In an embodiment, the similarity checking algorithm is based on cosine similarity. In cosine similarity, a similarity value of 1 indicates maximum similarity and 0 indicates no similarity. In an implementation, the design management model 106 and/or the processor 104 may be configured such that if the similarity value is greater than a predefined threshold, say 0.8, the geometric design is considered similar to the subsequent geometric design.

As mentioned above, the design management platform 102 may comprise the above-described functionalities and may provide an interactive user interface of the design management platform 102 which supports and enables the user to manage geometric designs.

Further, a computer-readable medium 160 which may comprise a computer program product 162 is shown in FIG 1, wherein the computer program product 162 may be encoded with executable instructions, that when executed, cause the computer system 100 or and/or the design management platform 102 to carry out the described method.

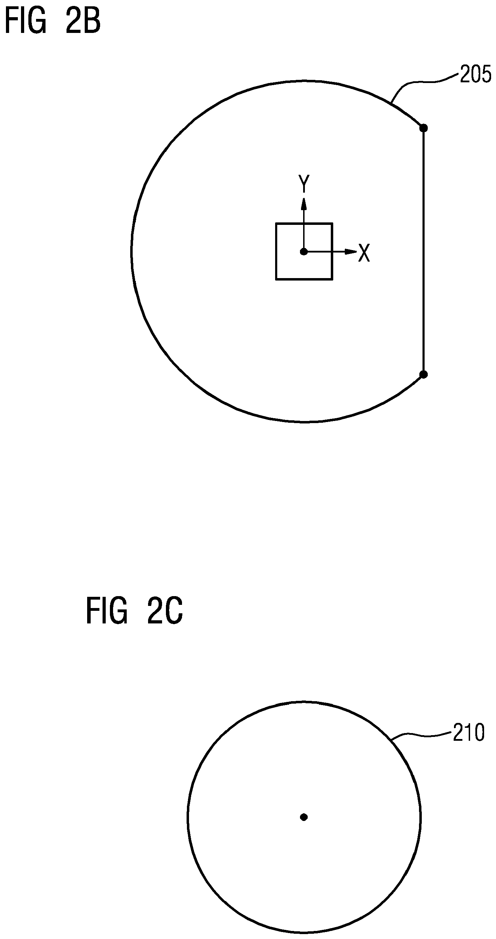

FIG 2A shows a geometric design 200 of a D-shaft with a hole. The D-shaft is a solid object obtained by performing an extrude operation on sketch of a D-section 205, as shown in FIG 2B, by a length of 250. Further, the hole 210 is a subtractive solid object formed by performing an extrude cut operation on sketch of a circle as shown in FIG 2C. Each of the D-shaft and the hole are associated with a specific dimension/scale and orientation (i.e., data properties), and when subjected to a union operation generate the D-shaft with the hole as shown in FIG 2A.

FIG 3 shows a graphical user interface 300 showing a property graph generated for the geometric design 200 of FIG 2A. The property graph comprises a plurality of nodes 305, 310,... 340 that represent at least one of a sketch, an operation performed on a sketch, a positive/solid object and a negative/subtractive solid object. The geometric design 200 comprises two sketches, a D-section 205 and a hole 210, as indicated by the starting nodes DSection 305 and HoleSketch 340 respectively, of the property graph.

The node DSection 305 corresponds to the D-Section 205 of FIG 2B. The sketch of the D-Section 205 in FIG 2B has the following data properties:

Shape embedding or sketch embedding = [0,0.3, 5, 8...21]

Sketch scale or dimension embedding = [30, 20]

Sketch normal or normal vector = [0, 0, 1]

Further, an 'Extrude' operation is performed on the D-Section 205 to generate a D-shaft, as indicated by nodes 310 and 315. The node 310 indicates the extrude operation performed on the D-section, whereas the node 315 indicates the positive/solid object i.e., the D-shaft, formed by extrusion of the D-section 205. The node 310 is further associated with the data property, namely length of 250, as shown. This indicates that the D-section is extruded by a length of 250 to generate the D-shaft.

Similarly, the node HoleSketch 340 corresponds to the hole 210 of FIG 2C. The sketch of the hole 210 has the following data properties:

Shape embedding or sketch embedding = [0, 2, 4, 1...6]

Sketch scale or dimension embedding = [3, 3]

Sketch normal = [1, 0, 0]

The sketch of the hole 210 is further subjected to an 'extrude cut' operation to generate the hole 210, as indicated by the nodes ExtrudeCut330 and Hole 335. The extrude cut operation has a data property, namely a length of 200 as shown. Here, the hole 210 is a negative/subtracted solid object.

The D-shaft formed by extrusion of the D-section 205 and the hole 210 are further subjected to a 'union' operation, as indicated by the node Union 320. The directed arrow from the node DShaft 315 to the node Union 320 is marked '+' to indicate that the D-shaft is a solid object. Similarly, the directed arrow from the node Hole 335 to the node Union 320 is marked '-' to indicate that the hole is a subtractive solid object. Upon performing the 'union' operation, the D-shaft with hole is obtained as indicated by the node DShaft_with_hole 325.

FIG 4 shows a schematic representation of a convolutional neural network 400, in accordance with an embodiment of the present invention. In the displayed embodiment, the convolutional neural network 400 comprises an input layer 410, a convolutional layer 411, a pooling layer 412, a fully connected layer 413 and an output layer 414. Alternatively, the convolutional neural network 400 may comprise several convolutional layers 411, several pooling layers 412 and several fully connected layers 413, as well as other types of layers. The order of the layers may be chosen arbitrarily. In an implementation, fully connected layers 413 are used as the last layers before the output layer 414.

In the convolutional neural network 400, the nodes 420, ..., 424 of layers 410, ..., 414 may be arranged as a d-dimensional matrix or as a d-dimensional image. In particular, in the two-dimensional case the value of the node 420, ..., 424 indexed with i and j in the n-th layer 410, ..., 414 may be denoted as $x^{(n)}[i,j]$. However, the arrangement of the nodes 420, ..., 424 of one layer 410, ..., 414 does not have an effect on the calculations executed within the convolutional neural network 400 as such, since these are given solely by the structure and the weights of the edges.

In particular, a convolutional layer 411 is characterized by the structure and the weights of the incoming edges forming a convolution operation based on a certain number of kernels. In particular, the structure and the weights of the incoming edges are chosen such that the values $x^{(n)}_k$ of the nodes 421 of the convolutional layer 411 are calculated as a convolution $x^{(n)}_k = K_k * x^{(n-1)}$ based on the values $x^{(n-1)}$ of the nodes 420 of the preceding layer 410, where the convolution* is defined in the two-dimensional case as

$$x_k^{(n)}[i,j] = (K_k * x^{(n-1)})[i,j] = \sum_{i'} \sum_{j'} K_k[i',j'] \cdot x^{(n-1)}[i-i', j-j']$$

Here the k-th kernel $K_k$ is a d-dimensional matrix (in the present embodiment, a two-dimensional matrix), which is usually small compared to the number of nodes 420, ..., 424 (e.g. a 3x3 matrix, or a 5x5 matrix). In particular, this implies that the weights of the incoming edges are not independent but chosen such that they produce said convolution equation. In particular, for a kernel being a 3x3 matrix, there are only 9 independent weights (each entry of the kernel matrix corresponding to one independent weight), irrespectively of the number of nodes 420, ..., 424 in the respective layer 410, ..., 414. In particular, for a convolutional layer 411 the number of nodes 421 in the convolutional layer is equivalent to the number of nodes 420 in the preceding layer 410 multiplied with the number of kernels.

If the nodes 420 of the preceding layer 410 are arranged as a d-dimensional matrix, using a plurality of kernels may be interpreted as adding a further dimension (denoted as "depth" dimension), so that the nodes 421 of the convolutional layer 421 are arranged as a (d+1)-dimensional matrix. If the nodes 420 of the preceding layer 410 are already arranged as a (d+1)-dimensional matrix comprising a depth dimension, using a plurality of kernels may be interpreted as expanding along the depth dimension, so that the nodes 421 of the convolutional layer 421 are arranged also as a (d+1)-dimensional matrix, wherein the size of the (d+1)-dimensional matrix with respect to the depth dimension is by a factor of the number of kernels larger than in the preceding layer 410.

The advantage of using convolutional layers 411 is that spatially local correlation of the input data may exploited by enforcing a local connectivity pattern between nodes of adjacent layers, in particular by each node being connected to only a small region of the nodes of the preceding layer.

In the displayed embodiment, the input layer 410 comprises 36 nodes 420, arranged as a two-dimensional 6x6 matrix. The convolutional layer 411 comprises 72 nodes 421, arranged as two two-dimensional 6x6 matrices, each of the two matrices being the result of a convolution of the values of the input layer with a kernel. Equivalently, the nodes 421 of the convolutional layer 411 may be interpreted as arranges as a three-dimensional 6x6x2 matrix, wherein the last dimension is the depth dimension.

The pooling layer 412 may be characterized by the structure and the weights of the incoming edges and the activation function of its nodes 422 forming a pooling operation based on a non-linear pooling function f. For example, in the two-dimensional case the values $x^{(n)}$ of the nodes 422 of the pooling layer 412 may be calculated based on the values $x^{(n-1)}$ of the nodes 421 of the preceding layer 411 as $x^{(n)}[i,j] = f(x^{(n-1)}[id_1, jd_2], ..., x^{(n-1)}[id_1+d_1-1, jd_2+d_2-1])$. In other words, the number of nodes 421, 422 may be reduced by using the pooling layer 412, by replacing a number $d_1 \cdot d_2$ of neighboring nodes 421 in the preceding layer 411 with a single node 422 being calculated as a function of the values of said number of neighboring nodes in the pooling layer. In particular, the pooling function f may be the max-function, the average or the L2-Norm. In particular, for the pooling layer 412 the weights of the incoming edges are fixed and are not modified by training.

The advantage of using the pooling layer 412 is that the number of nodes 421, 422 and the number of parameters is reduced. This leads to the amount of computation in the convolutional neural network 400 being reduced and to a control of overfitting.

In the displayed embodiment, the pooling layer 412 is a max-pooling, replacing four neighboring nodes with only one node, the value being the maximum of the values of the four neighboring nodes. The max-pooling is applied to each d-dimensional matrix of the previous layer. In the present embodiment, the max-pooling is applied to each of the two two-dimensional matrices, reducing the number of nodes from 72 to 18.

The fully-connected layer 413 may be characterized by the fact that a majority, in particular, all edges between nodes 422 of the previous layer 412 and the nodes 423 of the fully-connected layer 413 are present, and wherein the weight of each of the edges may be adjusted individually.

In the present embodiment, the nodes 422 of the preceding layer 412 of the fully-connected layer 413 are displayed both as two-dimensional matrices, and additionally as non-related nodes (indicated as a line of nodes, wherein the number of nodes was reduced for a better presentability).

In the present embodiment, the number of nodes 423 in the fully connected layer 413 is equal to the number of nodes 422 in the preceding layer 412. Alternatively, the number of nodes 422, 423 may differ. Furthermore, in the present embodiment, the values of the nodes 424 of the output layer 414 are determined by applying the Softmax function onto the values of the nodes 423 of the preceding layer 413. By applying the Softmax function, the sum of the values of all nodes 424 of the output layer is 1, and all values of all nodes 424 of the output layer are real numbers between 0 and 1. In particular, if using the convolutional neural network 400 for categorizing input data, the values of the output layer may be interpreted as the probability of the input data falling into one of the different categories.

The convolutional neural network 400 may also comprise a ReLU (acronym for "rectified linear units") layer. In particular, the number of nodes and the structure of the nodes contained in a ReLU layer is equivalent to the number of nodes and the structure of the nodes contained in the preceding layer. In particular, the value of each node in the ReLU layer is calculated by applying a rectifying function to the value of the corresponding node of the preceding layer. Examples for rectifying functions are $f(x) = \max(0,x)$, the tangent hyperbolics function or the sigmoid function.

In particular, convolutional neural networks 400 may be trained based on the back-propagation algorithm. To prevent overfitting, methods of regularization may be used, e.g. dropout of nodes 420, ..., 424, stochastic pooling, use of artificial data, weight decay based on the L1 or the L2 norm, or max norm constraints.

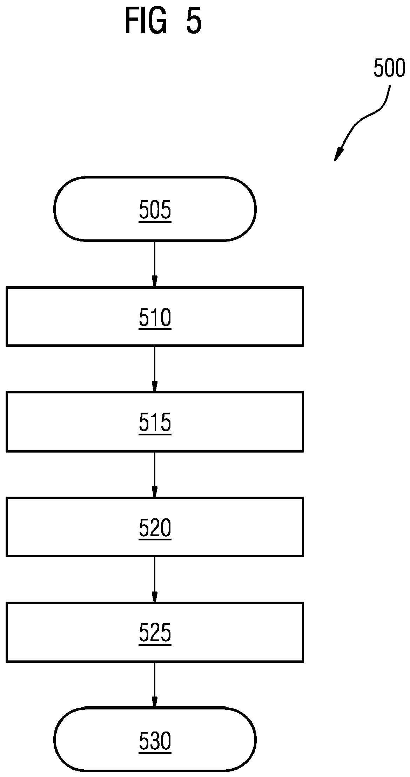

FIG 5 shows a flowchart of a method 500 for managing a geometric design created using a CAD tool, in accordance with an embodiment of the present invention. The method may start at 505 and the methodology may comprise several method steps carried out through operation of at least one processor similar to the processor 104.

At step 510, a request for generating a machine-comprehensible graph data model corresponding to a geometric design created using a CAD tool, is received from a requesting entity.

At step 515, a plurality of features associated with the geometric design are parsed to identify a set of first attributes indicative of a design intent, wherein one or more of the features are associated with at least one sketch used for creation of the geometric design and at least one operation performed on the sketch.

At step 520, the at least one sketch is analyzed to compute a set of second attributes indicative of a vector representation of the sketch.

At step 525, the machine-comprehensible graph data model generated based on the set of first attributes and the set of second attributes is provided to the requesting entity.

At 530, the methodology may end.

It should further be appreciated that the methodology 400 may comprise other acts and features discussed previously with respect to the computer-implemented method of managing geometric designs.

For example, the method may further comprise the act of providing a graphical representation of the graph data model on a user-interface.

In some examples, the methodology may further comprise the act of using the graph data model to identify similarity of at least one portion of the geometric design to at least one portion of a subsequent geometric design.

As discussed previously, acts associated with these methodologies (other than any described manual acts such as an act of manually making a selection through the input device 112) may be carried out by one or more processors. Such processor(s) may be included in one or more data processing systems, for example, that execute software components operative to cause these acts to be carried out by the one or more processors. In an example embodiment, such software components may comprise computer-executable instructions corresponding to a routine, a sub-routine, programs, applications, modules, libraries, a thread of execution, and/or the like. Further, it should be appreciated that software components may be written in and/or produced by software environments/languages/frameworks such as Java, JavaScript, Python, C, C#, C++ or any other software tool capable of producing components and graphical user interfaces configured to carry out the acts and features described herein.

The suggested approach offers several advantages over other approaches. E.g., the suggested approach helps with enabling machine-comprehension of geometric designs.

The present invention enables machine-comprehension of geometric designs created using CAD tools. In existing art, the design intent is not considered while converting geometric designs to machine-comprehensible formats like point clouds. However, in the present invention, the model tree 122 is parsed to capture the design intent by identifying a sequence of operations/steps performed by a designer during creation of the geometric design.

The use of graph data models for managing geometric designs also helps in reducing risk of knowledge loss with change in human resources employed for creating the geometric design.

FIG 5 illustrates a block diagram of a data processing system 1000 (also referred to as a computer system) in which an embodiment can be implemented, for example, as a portion of a product system, and/or other system operatively configured by software or otherwise to perform the processes as described herein. The data processing system 1000 may include, for example, the design management platform 102 and/or the computer system or data processing system 100 mentioned above. The data processing system depicted includes at least one processor 1002 (e.g., a CPU) that may be connected to one or more bridges/controllers/buses 1004 (e.g., a north bridge, a south bridge). One of the buses 1004, for example, may include one or more I/O buses such as a PCI Express bus. Also connected to various buses in the depicted example may include a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures include IA-32, x86-64, and ARM processor architectures.

Other peripherals connected to one or more buses may include communication controllers 1012 (Ethernet controllers, Wi-Fi controllers, cellular controllers) operative to connect to a local area network (LAN), Wide Area Network (WAN), a cellular network, and/or other wired or wireless networks 1014 or communication equipment.

Further components connected to various buses may include one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) including input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that includes a touch screen that serves as both an input device and a display device. Further, it should be appreciated that some input devices (such as a laptop) may include a plurality of different types of input devices (e.g., touch screen, touch pad, keyboard). Also, it should be appreciated that other peripheral hardware 1022 connected to the I/O controllers 1016 may include any type of device, machine, or component that is configured to communicate with a data processing system.

Additional components connected to various busses may include one or more storage controllers 1024 (e.g., SATA). A storage controller may be connected to a storage device 1026 such as one or more storage drives and/or any associated removable media, which can be any suitable non-transitory machine usable or machinereadable storage medium. Examples include nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system 1000 in accordance with an embodiment of the present disclosure may include an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may include Microsoft Windows, Linux, UNIX, iOS, and Android operating systems. Also, examples of data stores include data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, including the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures include VMware ESCi, Microsoft Hyper-V, Xen, and KVM.

Those of ordinary skill in the art will appreciate that the hardware depicted for the data processing system 1000 may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor 104 described herein may be located in a server that is remote from the display and input devices described herein. In such an example, the described display device and input device may be included in a client device that communicates with the server (and/or a virtual machine executing on the server) through a wired or wireless network (which may include the Internet). In some embodiments, such a client device, for example, may execute a remote desktop application or may correspond to a portal device that carries out a remote desktop protocol with the server to send inputs from an input device to the server and receive visual information from the server to display through a display device. Examples of such remote desktop protocols include Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein, the term 'processor' corresponds to any electronic device that is configured via hardware circuits, software, and/or firmware to process data. For example, processors described herein may correspond to one or more (or a combination) microprocessors, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system 1000 as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "include" and "comprise," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

Although an exemplary embodiment of the present disclosure has been described in detail, those skilled in the art will understand that various changes, substitutions, variations, and improvements disclosed herein may be made without departing from the scope of the disclosure in its broadest form.

None of the description in the present patent document should be read as implying that any particular element, step, act, or function is an essential element, which must be included in the claim scope: the scope of patented subject matter is defined only by the allowed claims.

List of reference numerals

| 102 | design management platform |
|---|---|
| 104 | processor |
| 106 | design management module |
| 108 | memory |
| 112 | input device |
| 114 | display device |
| 116 | Graphical User Interface |
| 118 | design UI |
| 120 | graph UI |
| 122 | model tree |
| 124 | data store |
| 126 | graph database |
| 160 | computer-readable medium |
| 162 | computer program product |
| 200 | geometric design of a D-shaft with a hole |
| 205 | D-section |
| 210 | circle |
| 300 | GUI showing a property graph |
| 305...340 | nodes of the property graph |
| 400 | convolutional neural network |
| 1000 | data processing system |
| 1002 | processor |
| 1004 | bridges/controllers/buses |
| 1006 | memory |
| 1008 | graphics controller |
| 1010 | display devices |
| 1012 | communication controllers |
| 1014 | networks |
| 1016 | I/O controllers |
| 1018 | input devices |
| 1020 | output devices |
| 1022 | peripheral hardware |
| 1024 | storage controllers |
| 1026 | storage device |
| 1028 | operating system |
| 1030 | software/firmware |
| 1032 | data stores |
| 1034 | server |

**Claims**

1. A computer-implemented method for managing a geometric design created using a Computer-Aided Design tool, the method comprising:

   receiving, by a processor (104), a request for generating a machine-comprehensible graph data model corresponding to the geometric design created using the Computer-Aided Design tool, from a requesting entity; parsing, by the processor (104), a plurality of features associated with the geometric design to identify a set of first attributes indicative of a design intent, wherein one or more of the features are associated with at least one sketch used for creation of the geometric design and at least one operation performed on the sketch; analyzing, by the processor (104),the at least one sketch to compute a set of second attributes indicative of a vector representation of the sketch; providing, by the processor (104), the machine-comprehensible graph data model generated based on the set of first attributes and the set of second attributes, to the requesting entity.

2. The method according to claim 1, wherein the geometric design is at least one of a two-dimensional design and a three-dimensional design.

3. The method according to claim 1, wherein the set of first attributes comprises one or more of a label, an expression, a setting, a parent feature and a child feature associated with each of the features.

4. The method according to claim 1 or 3, wherein parsing the plurality of feature associated with the geometric design to identify the first set of attributes comprises:
   parsing, by the processor (104), a model tree (122) comprising the plurality of features associated with the geometric design in the Computer-Aided Design tool, using an application programming interface, to extract one or more first attributes corresponding to each of the features, wherein the model tree (122) is a hierarchical data structure of the features arranged in an order of creation of the features.

5. The method according to claim 1, wherein the set of second attributes comprises one or more of a shape embedding indicative of a shape associated with the sketch, a dimension embedding indicative of a scale of the sketch, and a normal vector to the sketch.

6. The method according to claim 5, wherein analyzing the at least one sketch to compute the second set of attributes indicative of the vector representation of the sketch comprises:
   applying, by the processor (104), a first computer vision model to an image of the sketch to generate the shape embedding of the sketch.

7. The method according to claim 5, wherein analyzing the at least one sketch to compute the second set of attributes indicative of the vector representation of the sketch comprises:

   generating, by the processor (104), at least one bounding box around the sketch in the image, using a second computer vision model; computing, by the processor (104), the dimension embedding corresponding to the sketch based on spatial coordinates of the bounding box.

8. The method according to claim 5, wherein the normal vector to the sketch is computed using a predefined function.

9. The method according to claim 1, wherein providing the machine-comprehensible graph data model generated based on the set of first attributes and the set of second attributes, to the requesting entity, comprises:

   mapping, by the processor (104), the set of first attributes and the set of second attributes to a predefined ontology; generating, by the processor (104), triples based on the mapping of the set of first attributes and the set of second attributes to the predefined ontology, wherein the triples form the machine-comprehensible graph data model of the geometric design; and storing, by the processor (104), the triples to a graph database (126), wherein the graph database (126) is accessible by the requesting entity.

10. The method according to claim 1, wherein the graph data model is a property graph.

**11.** The method according to claim 1, further comprising:
providing, by the processor (104), a graphical representation of the graph data model on a user-interface.

**12.** The method according to claim 1, further comprising:
using, by the processor (104), the graph data model to identify similarity of the geometric design to a subsequent geometric design.

**13.** A computer system (100) arranged and configured to execute the steps of the computer-implemented method according to any one of the preceding claims 1 to 12.

**14.** A computer program product (162), comprising computer program code which, when executed by a computer system (100), cause the computer system (100) to carry out the method of one of the claims 1 to 12.

**15.** A computer-readable medium (160) comprising a computer program product (162) comprising computer program code which, when executed by a computer system (100), cause the computer system (100) to carry out the method of one of the claims 1 to 12.

EP 4 343 603 A1

# FIG 1

FIG 2A

FIG 2B

205

Y

X

FIG 2C

210

# FIG 3

300

Legend:

| | |
|---|---|
| Operation | Sketch |
| PositiveObject | NegativeObject |

Nodes:
- 320 Union
- 325 Dshaft with hole
- 315 Dshaft
- 310 Extrude (Length: 250)
- 305 DSection
- 335 Hole
- 330 Extrude Cut (Length: 200)
- 340 HoleSketch

DSection (305):
SketchEmbedding: [0, 0.3, 5, 8, ...21]
SketchScale: [30, 20]
Sketch normal: [0, 0, 1]

HoleSketch (340):
SketchEmbedding: [0, 2, 4, 1, ...6]
SketchScale: [3, 3]
Sketch normal: [1, 0, 0]

EP 4 343 603 A1

# FIG 4

EP 4 343 603 A1

# FIG 5

500

```
        505
         │
         ▼
    ┌─────────┐
    │   510   │
    └─────────┘
         │
         ▼
    ┌─────────┐
    │   515   │
    └─────────┘
         │
         ▼
    ┌─────────┐
    │   520   │
    └─────────┘
         │
         ▼
    ┌─────────┐
    │   525   │
    └─────────┘
         │
         ▼
        530
```

EP 4 343 603 A1

# FIG 6

21

Europäisches
Patentamt

European
Patent Office

Office européen
des brevets

# EUROPEAN SEARCH REPORT

Application Number

EP 22 19 6991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/063141 A1 (RAMEAU JEAN-FRANCOIS [FR]) 3 March 2016 (2016-03-03) * abstract; claims 1-9; figures 1-32 * * page 1, paragraph [0008] – page 2, paragraph [0020] * * page 3, paragraph [0035] – page 4, paragraph [0041] * * page 8, paragraph [0072] * | 1-15 | INV. G06F30/12 G06F30/15 ADD. G06F119/20 |
| X | WO 2020/198249 A1 (SCHNEIDER ELECTRIC SYSTEMS USA INC [US]) 1 October 2020 (2020-10-01) * abstract; figures 1-39,40A-40B * | 1-15 | |
| X | KR 2009 0029447 A (KOREA ELECTRONICS TELECOMM [KR]) 23 March 2009 (2009-03-23) * the whole document * | 1-15 | |
| X | RAGHAV BRAHMADESAM VENKATARAMAIYER: "Geometric Understanding of Sketches", ARXIV.ORG, CORNELL UNIVERSITY LIBRARY, 201 OLIN LIBRARY CORNELL UNIVERSITY ITHACA, NY 14853, 13 April 2022 (2022-04-13), XP091203977, * the whole document * | 1-15 | TECHNICAL FIELDS SEARCHED (IPC) G06F |
| A | CN 111 709 099 A (MCC CAPITAL ENG & RES INC LTD) 25 September 2020 (2020-09-25) * the whole document * | 1-15 | |

The present search report has been drawn up for all claims

| Place of search | Date of completion of the search | Examiner |
|---|---|---|
| Munich | 13 March 2023 | Fernandez, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 6991

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2023

| Patent document cited in search report | | Publication date | Patent family member(s) | | Publication date |
|---|---|---|---|---|---|
| US 2016063141 | A1 | 03-03-2016 | CA | 2901826 A1 | 26-02-2016 |
| | | | CN | 105389413 A | 09-03-2016 |
| | | | EP | 2990969 A1 | 02-03-2016 |
| | | | JP | 6687345 B2 | 22-04-2020 |
| | | | JP | 2016045967 A | 04-04-2016 |
| | | | KR | 20160024824 A | 07-03-2016 |
| | | | US | 2016063141 A1 | 03-03-2016 |
| WO 2020198249 | A1 | 01-10-2020 | AU | 2020247915 A1 | 14-10-2021 |
| | | | AU | 2020247916 A1 | 14-10-2021 |
| | | | AU | 2020248388 A1 | 14-10-2021 |
| | | | CA | 3131421 A1 | 01-10-2020 |
| | | | CA | 3133312 A1 | 01-10-2020 |
| | | | CA | 3134938 A1 | 01-10-2020 |
| | | | CN | 113614655 A | 05-11-2021 |
| | | | CN | 113614656 A | 05-11-2021 |
| | | | CN | 113614666 A | 05-11-2021 |
| | | | CN | 113853553 A | 28-12-2021 |
| | | | EP | 3924790 A1 | 22-12-2021 |
| | | | EP | 3928168 A1 | 29-12-2021 |
| | | | EP | 3935453 A1 | 12-01-2022 |
| | | | EP | 3935460 A1 | 12-01-2022 |
| | | | JP | 2022521816 A | 12-04-2022 |
| | | | JP | 2022521817 A | 12-04-2022 |
| | | | JP | 2022524642 A | 09-05-2022 |
| | | | US | 2022171891 A1 | 02-06-2022 |
| | | | US | 2022187815 A1 | 16-06-2022 |
| | | | US | 2022187818 A1 | 16-06-2022 |
| | | | US | 2022197272 A1 | 23-06-2022 |
| | | | WO | 2020198249 A1 | 01-10-2020 |
| | | | WO | 2020198250 A1 | 01-10-2020 |
| | | | WO | 2020198254 A1 | 01-10-2020 |
| | | | WO | 2020198256 A1 | 01-10-2020 |
| KR 20090029447 | A | 23-03-2009 | NONE | | |
| CN 111709099 | A | 25-09-2020 | NONE | | |

EPO FORM P0459

For more details about this annex : see Official Journal of the European Patent Office, No. 12/82